# EUROPEAN PATENT APPLICATION

(11) **EP 0 594 914 A1**
(43) Date of publication of application: **04.05.1994**
(21) Application number: 92430032.0
(22) Date of filing: 26.10.1992
(51) Int. Cl.: C08F 110/02, C08F 4/651, C08F 4/654

(54) **Preparation of a catalyst for the manufacture of polyethylene**

(71) Applicant: BP CHEMICALS S.N.C., F-92400 Courbevoie (FR)
(72) Inventor: Daine, Erick, F-13117 Lavera (FR); Speakman, John Gabriel, F-13117 Lavera (FR)
(74) Representative: Preece, Michael

(57) **Abstract**

A process for the preparation of a catalyst of the Ziegler type comprising the steps of:
(a) contacting a support, preferably comprising a refractory oxide having hydroxyl groups, with an inorganic compound of fluorine and subsequently with a dialkyl magnesium or a trialkyl aluminium compound,
(b) contacting the product of step (a) with a monochloro-organic compound,
(c) contacting the product of step (b) with at least one tetravalent titanium compound and
   The inorganic compound of fluorine is preferably (NH₄)₂SiF₆.

## Description

The present invention relates to the preparation of a Ziegler catalyst supported on a refractory oxide which is suited to the manufacture of polyethylene having a relatively low molecular weight and a relatively narrow molecular weight distribution. More particularly, the catalyst is used for polymerisation in the gaseous phase.

According to European patent application No. 0453088 A1, it is known to prepare a Ziegler type catalyst comprising magnesium, chlorine and tetravalent titanium and a granular support based on a refractory oxide for olefin polymerisation. More particularly, the preparation of the catalyst involves the three stages carried out in a nitrogen atmosphere in a liquid hydrocarbon medium, comprising (a) an initial stage, of bringing into contact a granular carrier based on a refractory oxide having hydroxyl groupings with a dialkyl magnesium and possible a trialkyl aluminium compound, (b) a second stage, of bringing into contact the product of the first stage with a monochloro-organic compound of general formula R⁶R⁷R⁸ CCl or of general formula R⁹R¹⁰R¹¹CCl in which R⁶ and R⁷ are identical or different alkyl radicals made up of 1 to 6 atoms of carbon, R⁸ is an atom of hydrogen or an alkyl radical made up of 1 to 6 atoms of carbon, identical to or different from R⁶ and R⁷, R⁹ an aryl radical made up of 6 to 10 atoms of carbon and R¹⁰ and R¹¹ are identical or different radicals chosen from among hydrogen, the alkyl radicals made up of 1 to 6 atoms of carbon and the aryl radicals having from 6 to 10 atoms of carbon, identical to or different from R⁹ and (c) a third stage of bringing into contact the product arising out of the second stage with at least one tetravalent titanium compound. The catalyst has the drawback of not being suited to the manufacture, particularly in the gaseous phase, of polyethylenes having a high melt index and a narrow molecular weight distribution.

Thus according to the present invention there is provided a process for the preparation of a catalyst of the Ziegler type comprising the steps of:
(a) contacting a support, preferably comprising a refractory oxide having hydroxyl groups, with an inorganic compound of fluorine and subsequently with a dialkyl magnesium or a trialkyl aluminium compound,
(b) contacting the product of step (a) with a monochloro-organic compound of general formula R⁶R⁷R⁸CCl or of general formula R⁹R¹⁰ R¹¹CCl in which R⁶ and R⁷ are identical or different alkyl radicals made up of 1 to 6 carbon atoms, R⁸ is an atom of hydrogen or an alkyl radical made up of 1 to 6 carbon atoms, identical to or different from R⁶ and R⁷, R⁹ is an aryl radical made up of 6 to 10 carbon atoms and R¹⁰ and R¹¹ are identical or different radicals chosen from among hydrogen, an alkyl radical made up of 1 to 6 atoms of carbon and an aryl radical having from 6 to 10 atoms of carbon, identical to or different from R⁹,
(c) contacting the product of step (b) with at least one tetravalent titanium compound and
   Preferably the support is based on a refractory oxide containing hydroxyl functional groups.

The solid support based on refractory oxide contains hydroxyl functional groups and may have a specific surface area (BET) of 50 to 1,000 m²/g, e.g. 100 to 600 m²/g and a pore volume of 0.5 to 5 ml/g, e.g. 1 to 3 ml/g.

The quantity of hydroxyl groups in the support depends on the support employed, on its specific surface area, on the physico chemical treatment and on the drying to which it may have been subjected beforehand. A support which is ready for use generally contains from 0.1 to 5, preferably from 0.5 to 3 millimols of hydroxyl group per gram. The support which may be granular, is preferably anhydrous at the time of its use in the catalyst preparation. For this purpose, it is preferably dehydrated by means which are known per se, such as a heat treatment ranging from 100°C to 950°C, e.g. 150°C to 800°C. The support may be chosen, in particular, from a silica, an alumina, a silica-alumina, or a mixture of these oxides, and may consist of particles which have a mass-mean diameter ranging from 20 to 250 microns, preferably 30 to 200 microns, especially 50 to 150 microns. The use of a silica is preferred, especially ones sold by Crosfield Company (Great Britain) under the commercial reference "SD 490" or by W R Grace Company (Germany) under the commercial reference "SG 332" or a microspheroidal silica sold by W R Grace Company (Germany) under the commercial reference "SD 3217".

The refractory oxide is treated in a first stage with an inorganic compound of fluroine, for example, (NH₄)₂ SiF₆.

The dialkylmagnesium compound is preferably of general formula Mg R¹R² optionally mixed or complexed with a trialkylaluminium of general formula A1 R³R⁴R⁵ in which R¹, R², R³, R⁴ and R⁵ are identical or different alkyl radicals containing from 1 to 12 carbon atoms, preferably from 2 to 8 carbon atoms, the quantity of trialkylalauminium used preferably not exceeding a molar ratio of 1/1 relative to the dialkylmagnesium in particular the molar ratio being 0.01/1 to 1/1, e.g. 0.1/1 to 0.5/1. Dibutylmagnesium, dihexylmagnesium, butylethylmagnesium, ethylhexylmagnesium or butyloctylmagnesium is preferably employed. The preferred trialkylaluminium compound is triethylaluminium.

Stage (b) of the preparation of the solid catalyst consists in bringing the solid product resulting from the first stage into contact with a monochloro organic compound. This compound may be a secondary or preferably tertiary alkyl monochloride containing 3 to 19, preferably 3 to 13 carbon atoms and having the general formula:

R⁶R⁷R⁸CC1

in which R⁶ and R⁷ are identical or different alkyl radicals containing from 1 to 6, e.g. 1 to 4 carbon atoms such as methyl, ethyl or n-propyl and R⁸ is a hydrogen atom or, preferably, an alkyl radical containing from 1 to 6, e.g. 1 to 4 carbon atoms, identical to or different from R⁶ and R⁷, such as methyl, ethyl or n-propyl. Secondary propyl chloride, secondary butyl chloride, but especially tert-butyl chloride are preferred.

The monochloro organic compound may also be a secondary or preferably tertiary cycloalkyl monochloride of general formula: 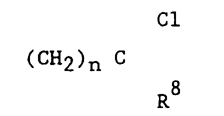
in which R⁸ is a hydrogen atom or, preferably, an alkyl radical containing from 1 to 6, e.g. 1 to 4 carbon atoms such as methyl or ethyl and n is a number from 4 to 8, e.g. 5 to 8, especially 5, such as cyclohexyl chloride or 1-methyl-1 chlorocyclohexane.

The monochloro organic compound can also be a compound containing at least one aryl radical, of general formula: R⁹R¹⁰R¹¹CCl, in which R⁹ is an aryl radical containing from 6 to 16, e.g. 6 to 10 carbon atoms and R¹⁰ and R¹¹ are identical or different radicals chosen from hydrogen, alkyl radicals containing from 1 to 6, e.g. 1 to 4 carbon atoms such as methyl, ethyl or n-propyl, and aryl radicals containing from 6 to 16, e.g. 6 to 10 carbon atoms, identical to or different from R⁹. The aryl radicals for R⁹, R¹⁰ and/or R¹¹ are usually aromatic hydrocarbyl groups such as phenyl, toluyl or naphthyl. Benzyl chloride and 1-phenyl-1-chloroethane may be preferred.

Stage (c) of the preparation of the solid catalyst consists in bringing the product resulting from stage (b) into contact with a compound of titanium at the maximum valency of 4. The titanium compounds are preferably soluble in the hydrocarbon liquid medium in which the catalyst is preferred. Preferably the tetravalent titanium compound is of general formula:

Ti(OR)ₘX₄₋ₘ

in which R is an alkyl radical containing from 1 to 6, e.g. 2 to 6 such as 2 to 4 carbon atoms, e.g. methyl, ethyl, propyl, isopropyl or butyl, X is a chlorine or bromine atom, m is a whole or fractional number equal to or greater than 0 and smaller than 4, e.g. 0 to 3, and n is a whole or fractional number equal to or greater than 0 and smaller than 3, e.g. 0 to 2. `The use of titanium tetrachloride is preferred.

The catalyst prepared in this way is particularly suited to the manufacture in the gaseous phase of homopolymers of ethylene and copolymers of ethylene with at least one alpha-olefin made up of 3 to 8 atoms of carbon having a high melt index (IF) and a distribution of molecular masses measured by GPC going from 3.2 to 4.5.

The invention will now be described by way of example only.

### Example 1: Preparation of a Catalyst (D)

Work is carried out in a fluidised bed reactor made up essentially of a vertical cylinder 75 cm high and 5 cm in diameter surmounted by a velocity reduction zone or chamber. This reactor is provided with a fluidisation base made up of a porous material arranged in the lower portion of the cylinder. It is also equipped with a heating electric resistance and a supply of fluidisation gas.

In the reactor maintained at 60°C and fed with fluidisation gas made up of nitrogen containing less than 2 vpm water vapour which circulates with a rising velocity of 12 cm/s, there is introduced 50 g of silica sold under the commercial name SG332 (R) by the Company Grace (Germany), having a specific surface (BET) of 325 m²/g and a porous volume of 1.84 ml/g. It is made up of particles having an average diameter mass of 77 µm.

After introducing the silica into the reactor, the reactor is heated to 200°C for 2 hours and is then cooled down to 60°C.

Then within 15 minutes there is introduced into the reactor 144 mg of (NH₄)₂SiF₆, crushed beforehand, and at the end of an hour the reactor is heated to 500°C for 4 hours, then cooled down to 60°C. The following operations are carried out in an inert nitrogen atmosphere.

Into a 1 litre stainless steel reactor, equipped with an agitation device rotating at 250 rpm, there is fed 600 ml of n-hexane, 60 g of the silica pretreated with (NH₄)₂SiF₆ and slowly over 30 minutes 90 millimols of dibutylmagnesium, at the temperature of 23°C. The mixture obtained in this way is agitated for one hour at 23°C. The solid product (B) obtained in this way is washed three times with 600 ml of n-hexane at 23°C and after such washing contains 1.2 millimols of magnesium per gramme of silica.

The reactor containing the solid product (B) in suspension in 600 ml of n-hexane is then heated to 50°C. Whilst being agitated, there is fed into the reactor slowly over 1 hour 180 millimols of tert-butyl chloride. At the end of this time, the mixture is agitated for one hour at 50°C, then cooled down to ambient temperature (23°C). The solid product (C) obtained is washed three times with 600 ml of n-hexane at 23°C. After such washing, it contains per gramme of silica 1.3 millimols of magnesium, 2.5 millimols of chlorine and no basic reduction function vis-a-vis titanium tetrachloride.

The reactor is then heated to 50°C and over 30 minutes there is slowly fed in 15 millimols of titanium tetrachloride. The mixture obtained is then agitated for one hour at 50°C, then cooled down to the ambient temperature (23°C). The solid product (D) obtained contains per gramme of silica 1.2 millimols of magnesium, 4.0 millimols of chlorine and only 0.47 millimols of tetravalent titanium.

### Example 2: Polymerisation of Ethylene in a Reactor with Mechanically Agitated Bed

A stainless steel reactor of 2.6 litres is kept under 0.1 MPa nitrogen and equipped with an agitator for dry powder rotating at 350 rpm. Into the reactor there is fed by way of charge powder 200 g of a polyethylene powder which is completely anhydrous and derived from a previous reaction, and then 10 millimols of triethylaluminium and 1.0 g of the catalyst (D). The reactor is heated to 80°C and into it is then fed hydrogen until a total pressure of 0.25 MPa is obtained and then ethylene is introduced until a total pressure of 0.75 MPa is obtained. Then ethylene is fed in to maintain the total pressure at 0.75 MPa. At the end of 2 hours 55 minutes, 600 g of a polyethylene having a melt index measured at 190°C under a loading of 2.16 kg = 3.63 g/10 minutes and having a distribution of molecular masses measured by GPC of 4.2 is recovered.

### Example 3: (Comparative) Preparation of a Catalyst (G)

A granular carrier made up of a silica powder "SG332" (R) sold by the Company Grace (Germany) is used, having a specific surface (BET) of 325 m²/g and a porous volume of 1.84 ml/g. It is made up of particles having an average diameter by mass of 77 µm. It is dried for 5 hours at 500°C. The following operations are carried out in an inert nitrogen atmosphere.

Into a 1 litre stainless steel reactor, equipped with an agitation device rotating at 250 rpm, there is introduced 600 ml of n-hexane, 60 g of dried silica and slowly over one hour 190 millimols of dibutylmagnesium, at a temperature of 23°C. The solid prduct (E) obtained in this way is washed three times with 500 ml of n-hexane at 23°C and after such washing contains 1.7 millimols of magnesium per gramme of silica.

Then the reactor containing the solid product (E) in suspension in 600 ml of n-hexane is then heated to 50°C. Whilst being agitated, there is fed into the reactor slowly over one hour 204 millimols of tert-butyl chloride. At the end of this time, the mixture is agitated for one hour at 50°C, and is then cooled down to the ambient temperature (23°C). The solid product (F) obtained is washed three times with 600 ml of n-hexane at 23°C. After such washing it contains per gramme of silica 1.7 millimols of magnesium, 2.7 millimols of chlorine and has no basic reduction function vis-a-vis titanium tetrachloride.

The reactor is then heated to 50°C and into it is fed slowly over 1 hour 45 minutes 50.1 millimols of titanium tetrachloride. The mixture obtained is then agitated for one hour at 50°C, then cooled down to the ambient temperature (23°C). The solid product (G) obtained is washed three times with 600 ml of n-hexane at 23°C. After such washing, it contains per gramme of silica 1.7 millimols of magnesium, 4.8 millimols of chlorine and only 0.54 millimols of tetravalent titanium.

### Example 4: (Comparative) Polymerisation of Ethylene in a Reactor with Mechanically Agitated Bed

Work is carried out precisely as in Example 2 for polymerisation, except that 1.0 g of the catalyst (G is introduced in lieu of 1.0 g of the catalyst (D). At the end of 3 hours 20 minutes of polymerisation, 600 g of a polyethylene having a melt index measured at 190° under a loading of 2.16 kg = 2.57 g/10 minutes and having a distribution of molecular masses measured by GPC (gel permeation chromatography) of 5.0 is recovered.

## Claims

1. A process for the preparation of a catalyst of the Ziegler type comprising the steps of:
(a) contacting a support, preferably comprising a refractory oxide having hydroxyl groups, with an inorganic compound of fluorine and subsequently with a dialkyl magnesium or a trialkyl aluminium compound,
(b) contacting the product of step (a) with a monochloro-organic compound of general formula R⁶R⁷R⁸CC1 or of general formula R⁹R¹⁰R¹¹ CC1 in which R⁶ and R⁷ are identical or different alkyl radicals made up of 1 to 6 carbon atoms, R⁸ is an atom of hydrogen or an alkyl radical made up of 1 to 6 carbon atoms, identical to or different from R⁶ and R⁷, R⁹ is an aryl radical made up of 6 to 10 carbon atoms and R¹⁰ and R¹¹ are identical or different radicals chosen from among hydrogen, an alkyl radical made up of 1 to 6 atoms of carbon and an aryl radical having from 6 to 10 atoms of carbon, identical to or different from R⁹,
(c) contacting the product of step (b) with at least one tetravalent titanium compound.
